# EUROPEAN PATENT APPLICATION

(11) **EP 3 798 747 A1**
(43) Date of publication of application: **31.03.2021**
(21) Application number: 19199846.7
(22) Date of filing: 26.09.2019
(51) Int. Cl.: G05B 17/02, G05B 19/409

(54) **CONTROLLING A MACHINE BASED ON AN ONLINE DIGITAL TWIN**

(71) Applicant: Siemens Aktiengesellschaft, 80333 München (DE)
(72) Inventor: MacWilliams, Asa, 82256 Fürstenfeldbruck (DE); Zakharov, Sergey, 85614 Kirchseeon (DE); Agthe, Bernhard, 86899 Landsberg am Lech (DE); Planche, Benjamin, 81539 München (DE)

(57) **Abstract**

A Method for controlling a physical machine (M1) is described. At least one object (M1), which is available for augmented reality, based on a visual description of a digital twin model (3D-M) from a digital twin server (11, 51) is detected by an augmented reality interface device (13). Further a digital twin model (3D-M) of the detected object (M1) from the digital twin server (11, 51) is received by the augmented reality interface device (13). Furthermore the augmented reality interface device (13) is embedded in a 3D scene provided by the digital twin server (11). Further there is an interaction with the object (M1) by a set of commands (CI, CC, CL, CP) particular available for this object (M1, M2, M3, M4). Also an augmented reality control system (20, 50) is described.

## Description

The invention concerns a method for controlling a physical machine. Further, the invention relates to an augmented reality control system.

Production in factories can be alleviated by using augmented reality interaction. Using a control device based on augmented reality, a person is enabled to interact with a physical machine, which is used for the production. However, if there are a plurality of physical machines of different types, each type of machine has its own digital twin and different sets of control commands. Hence an augmented reality based control system should be enabled to detect different physical machines, which are in a range of coverage of the operator.

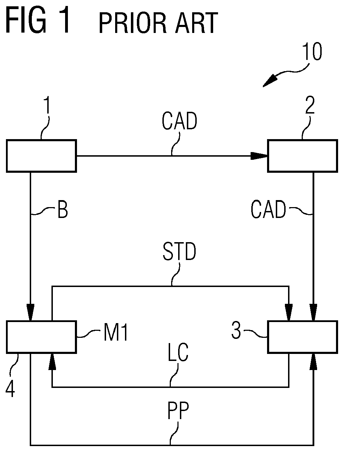

To date there are no available universal solutions that provide an interface to detect and dynamically interact with a set of functionally different physical machines through their digital twins. Merely, there are fixed augmented reality applications, wherein a machine model represented in a fixed augmented reality application on a mobile device. In such systems one device contains the model of the machine for object detection and tracking, the visualization of the controls and the commands needed to communicate with the machine. FIG 1 shows an example of a conventional augmented reality control system. For a conventional augmented reality control system for each new configuration or appearance or pose of a physical machine a new CAD model has to be created by the engineering unit. The CAD model has then to be exported to a model database and the CAD model is subsequently fed into the augmented reality device. Consequently, an extensive effort has to be made for adapting the augmented reality model to a variable physical machine. Particularly in a complex environment with a plurality of objects the conventional approach is extremely elaborate and costly.

Hence, there is a problem of a more flexible use of an augmented reality based control system in a more complex environment with a plurality of physical machines of different type.

This problem is solved by a method for controlling a physical machine according to claim 1 and an augmented reality control system according to claim 10.

According to the method for controlling a physical machine at least one object is detected, which is available for augmented reality, based on a visual description of a digital twin model from a digital twin server by an augmented reality interface device. A digital twin means a dynamic virtual representation, for example digital replica of a physical machine to be controlled, wherein the digital twin updated by sensor data from the physical machine. Under a physical machine, an electronically controllable tool, for example a robot, is to be understood.

The augmented reality interface device may preferably include a portable device, for example a table or a smartphone that provides user with an interface to interact with a physical machine. Given a certain environment, it is capable of detecting the objects within it. The object detection is based on the visual description of the digital twin model from the digital twin server.

The digital twin server provides a model of the physical machine for visualization and tracking. The digital twin server gets live data from the physical machine for creating and updating the digital twin model. Further a digital twin model of the detected object is received from the digital twin server by the augmented reality interface device. Then the augmented reality interface device is embedded as a control user interface device in a 3D scene of the physical machine provided by the digital twin server. The 3D scene of the physical machine contains the appearance, the poses, features and information about the motion of the physical machine.

Furthermore the augmented reality interface device is used to interact with the object by a set of commands particular available for this object. The interaction can be realized using visualized tools like floating arrows that can be displayed and interacted by the control user interface device. Since the model of the physical machine is created by the digital twin server, the flexibility of the process of augmented reality control is increased compared to conventional methods. Particularly, a creation of a new CAD model by an engineering team is not necessarily, in case the physical machine changes its configuration, appearance or pose. Instead, a digital twin server is used, which already knows the exact status of the physical machine at all times anyway.

The digital twin server continuously reports the current status of the physical machine to the augmented reality interface device and can even predict its future configuration. Thus, the continuous generation of updated CAD models is not necessary any longer. In other words, the digital twin server is used to guide augmented reality based object detection and to allow augmented reality interaction between an augmented reality interface device and a physical machine. The augmented reality interface device can visualize the expected execution process of the physical machine using an augmented reality overlay, which enables a better control over the physical machine.

The digital twin server provides a level of abstraction. In contrast to conventional augmented reality control systems, the augmented reality interface device according to the invention does not need hard-coded descriptions of the physical machine's visual characteristics, its behavior or the desired augmented reality user interfaces. The digital twin model may be created based on a complete 3D model of a physical machine, which may already be available from the engineering and design phase, for example a CAD model or a simulation model. The method according to the invention allows a complete virtual reality simulation of the future augmented reality interaction, before the physical machine is built, based on the same digital twin model as is later used for augmented reality based control. Hence the digital twin models may not only be used for controlling a machine, but also for interactive training for new employees also before existence of the physical machine in reality.

The augmented reality control system comprises at least one physical machine and a control user interface device for communication between the physical machine and one of the following devices:
- a digital twin server for providing a digital twin model of the physical machine,
- an augmented reality interface device for
   - detecting the physical machine based on a visual description of the digital twin model from the digital twin server,
   - receiving a digital twin model of the detected machine from the digital twin server,
   - embedding the augmented reality interface device in a 3D scene provided by the digital twin server,
   - interacting with the detected physical machine by a set of commands particular available for this physical machine.

The augmented reality control system shares the advantages of the method for controlling a physical machine.

The units of the augmented reality control system mentioned above, in particular the digital twin server and the augmented reality interface, can be completely or partially realized as software modules. A realization largely in the form of software modules can have the advantage that applications already installed on an existing system after possibly adding necessary hardware like a digital twin server, can be updated, with relatively small effort, to install and run the method of the present invention. The object of the invention is also achieved by a computer program product with a computer program that is directly loadable into the memory of a computer of an augmented reality control system, and which comprises program units to perform the steps of the inventive method when the program is executed by the augmented reality control system. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a computer. A method or unit can comprise one or more micromethods or their equivalents.

Particularly advantageous embodiments and features of the invention are given by the dependent claims, as revealed in the following description. Features of different claim categories may be combined as appropriate to give further embodiments not described herein.

According to a variation of the inventive method the augmented reality interface device initializes its object detection and tracking code based on the digital twin models of physical machines that are nearby. That means that in case an object has been detected as being nearby, the augmented reality interface device starts to supervise the object based on an identification and based on corresponding digital twin models received from the digital twin server. The object detection may be performed based on a visual description of the digital twin models from the digital twin server.

Preferably the detection and identification of nearby machines and the detection of the position thereof is done by one of the following technologies:
- an initial positioning technology,
- bar code identification,
- Bluetooth beacons.

An initial positioning technology, for example based on GPS, may be used to find out the position of a physical machine nearby. Bar code identification may be used to identify a physical machine. Bluetooth beacons may be installed on the physical machines and on fixed well-known positions. Based on triangulation between three beacons, wherein also one of the beacons is mounted on the physical machine, the position of a physical machine can be determined.

It may be further preferred that the control unit is used for at least one of the following functions:
- direct access to the physical machine,
- sending live data to the digital twin server,
- receiving commands from the augmented reality interface device.

For controlling a physical machine control commands are sent from the augmented reality interface device to the control unit. The control unit is directly connected to the physical machine and controls the physical machine based on the received commands from the augmented reality interface device. Further, the control unit also sends live data to the digital twin server, which are used by the digital twin server for adapting the digital twin model of the corresponding physical machine. Advantageously, the digital twin model is continously adapted to the real state of the physical machine.

In an advantageous version of the method for controlling a physical machine the 3D scene graph contains at least one of the following information:
- the appearance of the physical machine,
- virtual 3D controls for the physical machine,
- descriptions of data visualizations in augmented reality.

The appearance of the physical machine may be displayed on a screen of the augmented reality interface device for illustration. The illustration can support the understanding of the current position and orientation of the physical machine. Furthermore a current pose or motion may also be visualized on the display of the augmented reality interface device for illustration. The virtual 3D controls for the physical machine include for example floating arrows that can be displayed and interacted with in augmented reality. The descriptions of data visualizations in augmented reality may indicate temperature charts or similar information.

In a preferred variation of the method for controlling a physical machine the digital twin server provides two sets of parameters pertaining to the machine:
- current operational parameters,
- control parameters.

The current operational parameters may comprise a current motor position of a motor for controlling a robot arm and/or temperature. The current operational parameters come from the control unit. That information may be used to adapt the digital twin model to current state of a physical machine. The control parameters may comprise a desired position and/or a maximum speed and include information which is sent to the control unit.

In a preferred variation of the method for controlling a physical machine the digital twin server provides at least one set, preferable two sets, of mapping rules. These mapping rules include visualization rules and/or control rules. Visualization rules are rules that describe how the operational parameters of the physical machine affect the 3D scene graph. For example, the current motor position describes an angle of a robot arm of a physical machine or the current temperature represents a data point in a temperature graph. Further the control rules are rules that describe how an interaction with the virtual 3D controls affect the control parameters. For example a touching the "right" arrow on the display of the augmented reality interface device increases the target step motor position by 5%.

Other objects and features of the present invention will become apparent from the following detailed descriptions considered in conjunction with the accompanying drawings. It is to be understood, however, that the drawings are designed solely for the purposes of illustration and not as a definition of the limits of the invention. They are not necessarily drawn to scale.
FIG 1 shows a schematic view of an augmented reality control system according to prior art,
FIG 2 shows a schematic depiction of an augmented reality control system according to an embodiment of the invention,
FIG 3 shows a flow chart depicting a process for controlling a physical machine,
FIG 4 shows a flow chart illustrating step 3.IV of flow chart of FIG 3,
FIG 5 shows a schematic view of an augmented reality control system according to an embodiment of the invention.

In FIG 1 a schematic view of an augmented reality control system 10 according to prior art is shown. As you can take from FIG 1, the conventional augmented reality control system 10 comprises an engineering unit 1, which is used for an engineering process including planning and designing a physical machine. According to the plans of the engineering process 1 a physical machine M1 is built based on building steps determined in the engineering process. Also the engineering process comprises the construction of a CAD model CAD, which is saved in a model-databank 2. The CAD model CAD is exported to an augmented reality device 3, wherein a hard-coded model is generated based on the CAD model. The augmented reality device 3 sends local control commands LC to the physical machine M1 based on the hard-coded model. Further, the physical machine M1 transmits information STD concerning its status to the augmented reality device 3. The physical machine M1 also transmits information PP related to its physical properties to the augmented reality device 3. For the conventional augmented reality control system 10 for each new configuration or appearance or pose of the physical machine M1 a new CAD model has to be created by the engineering unit. Then the new CAD model CAD has to be exported to the model database 2 and the CAD model CAD is subsequently fed into the augmented reality device 3.

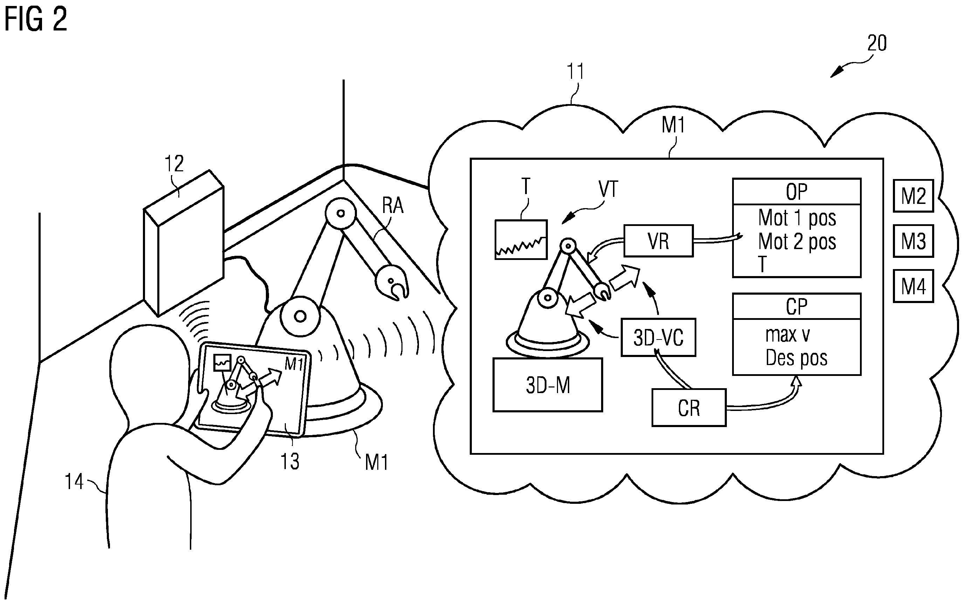

In FIG 2 a schematic view of an augmented reality control system 20 according to an embodiment of the invention is shown. The augmented reality control system 20 is used for controlling a plurality of different physical machines (only one physical machine M1 is shown in FIG 2). The physical machine M1 is shown on the left side of FIG 2 in the center between the remaining parts 11, 12, 13 of the augmented reality control system 20. The physical machine M1 comprises a robot arm for grasping a tool or something like that.

Additionally to the physical machines the augmented reality control system 20 also comprises a digital twin server 11. The digital twin server 11 is used for providing a digital twin model 3D-M of the physical machines. The digital twin server 11 is shown on the right side of FIG 1. On the digital twin server 11 a first physical machine M1 is depicted. In other words, the digital twin server 11 provides a 3D scene graph, comprising a 3D image, which shows the appearance of the physical machine M1. The 3D scene graph is used for showing poses, features, meshes and motions of the physical machine M1. The symbolic depiction of the first physical machine M1 on the digital twin server 11 is surrounded by a lot of information and commands, which are used for controlling the first physical machine M1 and which are also stored in the digital twin server 11. Further, the digital twin server 11 provides so-called virtual 3D controls, which are depicted as floating arrows that can be displayed for interacting with in augmented reality. Further, the digital twin server 11 includes some data visualizations in augmented reality, as for example temperature charts. Furthermore, the digital twin server contains so-called current operational parameters OP. The current operational parameters OP comprise information about the temperature T and the positions Mot 1 pos, Mot 2 pos of different motor positions, wherein the motors are used for moving the robot arm RA of machine M1. This information comes from a control unit 12. The control unit 12 is depicted in FIG 2 on the left side. The digital twin server 11 also provides so-called control parameters CP, which comprise values of the maximum speed v of the machine M1 and of a desired position Des pos of the robot arm M1. The control unit 12 sends these control parameters CP to the machine M1 for controlling it. The control unit 12 provides direct access to the physical machine M1 and sends live data to the digital twin server 11. Further, the control unit 12 receives commands from a so called augmented reality interface device 13.

Furthermore, the digital twin server 11 comprises visualization rules VR that describe how the operational parameters OP of the machine M1 affect the 3D scene graph. For example a current motor position describes an angle of a robot arm RA or a current temperature T, which is a data point in a temperature graph VT. Additionally, the digital twin server 11 stores so-called control rules CR. These rules CR describe, how an interaction with the virtual 3D control 3D-VC affect the control parameters CP or operational parameters OP. For example touching the "right" arrow increases the target step motor position by 5%.

As mentioned above, the augmented reality control system 20 also comprises an augmented reality interface device 13. The augmented reality interface device 13 is depicted on the lower left side of FIG 2 and is kept by a user person 14. The reality interface device 13 is a portable device, in the current embodiment a tablet, which provides the user 14 with an interface to interact with the physical machine M1. On the reality interface device 13 a certain environment is shown, wherein the augmented reality interface device 13 is capable of detecting the object of interest within it. The object detection is based on the visual description of a digital twin model from the digital twin server 11. The digital twin models 3D-M are received from the digital twin server 11 and the augmented reality interface device 13 is embedded in the 3D scene. Therefore a precise position of the augmented reality interface device 13 has to be well-known. The augmented reality interface device 13 allows the user 14 to receive the set of commands available for this particular machine M1 and actively interact with it through the control unit 12. Further, the augmented reality interface device 13 initializes its object detection and tracking code based on the digital twin models 3D-M of machines that are nearby. The initialization can be done by another initial positioning technology like GPS, or by a bar code identification or Bluetooth beacons.

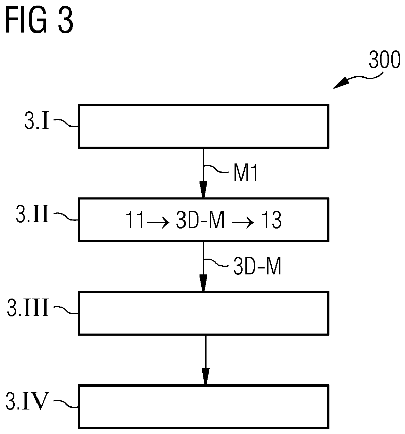

In FIG 3 there is shown a flow chart 300 depicting a method for controlling a physical machine M1. At step 3.1 there are some objects M1, M2, M3, M4 detected by an augmented reality interface device 13, which are available for augmented reality, based on a visual description of a digital twin model 3D-M, which is provided by a digital twin server 11. In other words, an augmented reality interface device 13, as it is depicted in FIG 2, detects some physical machines nearby based on some initial positioning technology, for example bar code identification or GPS. Having detected a physical machine M1, the augmented reality interface device 13 contacts the digital twin server 11 and queries information about the detected physical machine M1. As above-mentioned, the digital twin server 1 gets so-called live data from each physical machines. Further, the digital twin server 11 stores a lot of control and operational data and also so-called mapping rules for interpreting operational parameters OP of the machines and for interpreting an effect of interaction of the virtual 3D controls 3D-VC to the control parameters CP.

At step 3.II a digital twin model 3D-M of the detected machine M1 is received from the digital twin server 11 by the augmented reality interface device 13. At step 3.III the augmented reality interface device 13 is embedded in a 3D scene provided by the digital twin server 11. This means that the reality interface device 13 receives a set of commands for the detected machine M1 and at step 3.IV the augmented reality interface device 13 interacts with the detected machine M1 using the set of commands particular available for the detected machine M1.

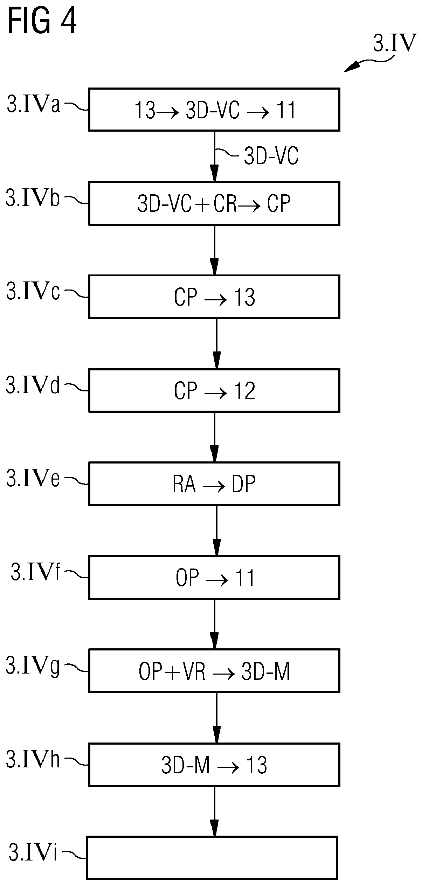

As shown in FIG 4, step 3.IV is illustrated in details for a more detailed understanding.

At step 3.IVa, the augmented reality interface device 13 sends some 3D-virtual control commands 3D-VC to the digital twin server 11. At step 3.IVb the digital twin server 11 computes based on saved control rules CR some control parameters CP like a maximum speed max v of a robot arm RA and a desired position of the robot arm RA of the machine M1.

The so-called control rules CR are used to describe how the virtual 3D controls 3D-VC affect the control parameters CP. For example a touching the "right" arrow increases the target step motor position by 5%. Based on the control rules CR, the user is enabled to dose his movements on the screen of the reality interface device 13 such that a desired movement of the robot arm RA of the machine 11 is done at a correct quantified measure value.

At step 3.IVc, the digital twin server 11 sends the control parameters CP to the reality interface device 13.

Further, at step 3.IVd, the augmented reality interface device 13 sends the received control parameters CP in form of control commands CC to a control unit 12. As mentioned above, the control commands CC for example comprise some parameters like a desired position and a maximum speed of a robot arm of the machine M1.

At step 3.IVe the control unit 12 uses the above-mentioned control commands for controlling the machine, which means that the robot arm RA is moved to the desired position DP. Further, the control unit 12 sends at step 3.IVf some so-called current operational parameters OP about the machine, such like speed and temperature of the machine to the digital twin server 11. Based on the current operational parameters OP the digital twin server 11 calculates at step 3.IVg based on visualization rules VR the effect of the received operational parameters OP to the 3D scene graph. Then at step 3.IVh, the modified 3D scene graph is sent to the augmented reality interface device 13 and is depicted at step 3.IVi on the screen of the augmented reality interface device 13 such that the user 14 gets a refreshed view of the status of the supervised machine M1 affected by the control virtual control commands 3D-VC of step 3.IVa. Hence, the user 14 has the complete control over the machine M1 using a digital twin of the machine, which is visualized on the screen of the augmented reality interface device 13 i.e. his tablet 13. The current operational parameters OP may also contain some additional information about the status of the machine M1, like a temperature or such like that. Furthermore, the digital twin server 1 may also provide a mesh for the augmented reality interface device 13 such that the user 14 is enabled to precise his control movements on the screen of the tablet 13.

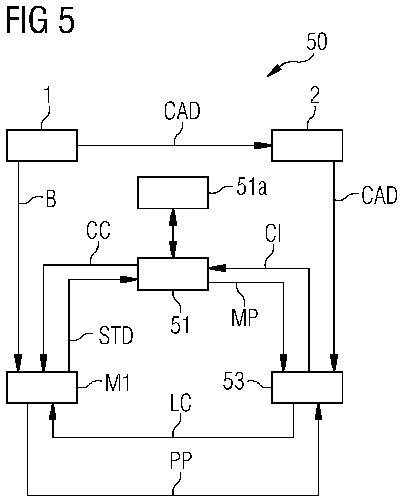

In FIG 5 a schematic view of an augmented reality control system 50 according to an embodiment of the invention is illustrated. Similarly to the conventional augmented reality control system 10, which has been illustrated in FIG 1, the augmented reality control system 50 according to an embodiment of the invention comprises a unit 1 for an engineering process, which is used for planning and designing a physical machine M1. According to the plans of the engineering process the physical machine M1 is built based on building steps determined in the engineering process. The engineering unit 1 also performs a construction process of a CAD model CAD, which is saved in a model-databank 2. The CAD model CAD is exported to an augmented reality interface device 53, which is saved as hard-coded model in the augmented reality interface device 53.

Further, the augmented reality control system 50 comprises a digital twin server 51 and a simulation backend 51a connected to the digital twin server 51.

In contrast to the conventional augmented reality control system 10 the augmented reality control system 50 according to an embodiment of the invention controls the physical machine M1 based on the following two control loops. A first control loop may be named as an augmented reality interface device - digital server - machine-loop. A second control loop may be named a physical machine - digital server - augmented reality interface device-loop depending from the succession of participating units.

First the augmented reality interface device-digital server-machine-loop is explained: An augmented reality interface device 53 sends control input CI comprising a desired control sequence to the digital twin server 51. The digital twin server 51 processes the control sequence CI and sends the processed control sequence as control commands CC to the physical machine M1. The physical machine M1 itself transmits its physical properties PP back to the augmented reality interface device 53.

Next, the physical machine - digital server - augmented reality interface device-loop is described: The physical machine M1 transmits some status information STD to the digital twin server 51. Further, the digital twin server 51 receives a simulated status of the physical machine M1 from a simulation backend 51a, which simulates the status of the physical machine M1 based on the status information STD. Then the digital twin server 51 continuously reports the current status of the physical machine and a predicted and modelized future configuration MP of the physical machine M1 to the augmented reality interface device 53. Based on the received model MP of the physical machine M1, the augmented reality interface device 53 generates some local control orders LC. Further, the received model MP is used for generating control input CI, which is part of the first loop.

Thus a continuous generation of updated CAD models for the model databank 2 is not necessary any longer. Indeed, the augmented reality interface device 53 needs to know its current position precisely.

Although the present invention has been disclosed in the form of preferred embodiments and variations thereon, it will be understood that numerous additional modifications and variations could be made thereto without departing from the scope of the invention. For the sake of clarity, it is to be understood that the use of 'a' or 'an' throughout this application does not exclude a plurality, and 'comprising' does not exclude other steps or elements.

## Claims

1. Method for controlling a physical machine (M1), comprising the steps:
- detecting at least one object (M1), which is available for augmented reality, based on a visual description of a digital twin model (3D-M) from a digital twin server (11, 51) by an augmented reality interface device (13).
- receiving a digital twin model (3D-M) of the detected object from the digital twin server (11, 51) by the augmented reality interface device (13),
- embedding the augmented reality interface device (13) in a 3D scene provided by the digital twin server (11, 51),
- interacting with the object (M1) by a set of commands (CI, CC, LC, CP) particular available for this object (M1).

2. Method claim according to claim 1, wherein the augmented reality interface device (13) initializes its object detection and tracking code based on the digital twin models (3D-M) of machines (M1, M2, M3, M4) that are nearby.

3. Method claim according to claim 2, wherein the detection of nearby machines (M1, M2, M3, M4) is done by one of the following technologies:
- an initial positioning technology,
- bar code identification,
- Bluetooth beacons.

4. Method claim according to one of the preceding claims, further comprising a control unit (12), which is used for
- direct access to the physical machine (M1, M2, M3, M4),
- sending live data to the digital twin server (11),
- receiving commands (CI) from the augmented reality interface device (13).

5. Method claim according to one of the preceding claims, wherein the 3D scene graph contains at least one of:
- the appearance of the machine (M1),
- virtual 3D controls (3D-VC) for the machine (M1),
- descriptions of data visualizations in augmented reality.

6. Method claim according to one of the preceding claims, wherein the digital twin server (11) provides two sets of parameters pertaining to the machine (M1):
- current operational parameters (OP),
- control parameters (CP).

7. Method claim according to claim 6, wherein the current operational parameters (OP) comprise a motor position (Mot 1 pos, Mot 2 pos) and/or a temperature value (T).

8. Method claim according to claim 6, wherein the control parameters (CP) comprise a desired position (Des pos) and/or a maximum speed (max v).

9. Method claim according to one of the preceding claims, wherein the digital twin server (11) provides visualization rules (VR) and/or control rules (CR).

10. Augmented reality control system (20, 50), comprising:
- at least one physical machine (M1),
- a digital twin server (11) for
- providing a digital twin model (3D-M) of the physical machine (M1),
- an augmented reality interface device (13) for
- detecting the physical machine (M1) based on a visual description of the digital twin model (3D-M) from the digital twin server (11),
- receiving a digital twin model (3D-M) of the detected machine (M1, M2, M3, M4) from the digital twin server (11),
- embedding the augmented reality interface device (13) in a 3D scene provided by the digital twin server (11),
- interacting with the detected machine (M1, M2, M3, M4) by a set of commands (CI, CC, LC, CP) particular available for this machine (M1, M2, M3, M4).

11. A computer program product comprising a computer program that is directly loadable into a memory of an augmented reality control system (20, 50) and which comprises program elements for performing steps of the method according to any of claims 1 to 9, when the computer program is executed by the augmented reality control system (20, 50).

12. A computer-readable medium on which are stored program elements that can be read and executed by a computer unit in order to perform steps of the method according to any of claims 1 to 9, when the program elements are executed by the computer unit.
